Europäisches Patentamt

European Patent Office

Office européen des brevets

(11) Numéro de publication: **0 254 123**
**A1**

## (12) DEMANDE DE BREVET EUROPEEN

(21) Numéro de dépôt: **87109797.8**

(22) Date de dépôt: **07.07.87**

(51) Int. Cl.⁴: **G06F 5/06**

(30) Priorité: **10.07.86 FR 8610095**

(43) Date de publication de la demande:
**27.01.88 Bulletin 88/04**

(84) Etats contractants désignés:
**BE DE FR GB IT NL SE**

(71) Demandeur: **ALCATEL CIT**
**33, rue Emeriau**
**F-75015 Paris(FR)**

(72) Inventeur: **Bakka, Raymond**
**ALCATEL CIT Commutation Route de**
**Perros-Guirec**
**F-22304 Lannion(FR)**

(74) Mandataire: **Weinmiller, Jürgen et al**
**Lennéstrasse 9 Postfach 24**
**D-8133 Feldafing(DE)**

(54) **Mémoire de file d'attente.**

(57) Cette mémoire de file d'attente comporte N registres à décalage unidirectionnels (10, 20) à P étages constituant une pile de données pour mots binaires à N digits, un registre à décalage bidirectionnel (30) à P + 1 étages constituant un registre de pointage de pile dans lequel circule un pointeur déplacé dans un sens à chaque inscription d'un mot dans la pile de données et dans l'autre à chaque lecture d'un mot dans la pile de données et N ensembles (40, 50) de portes logiques constituant des sélecteurs de données 1 parmi P qui sont placés aux sorties des registres à décalage (10, 20) de la pile et adressés par le registre de pointage de pile (30), et qui permettent d'extraire de la pile de données le mot le plus anciennement mémorisé sans avor été lu.

EP 0 254 123 A1

## Mémoire de file d'attente .

La présente invention concerne l'électronique et plus particulièrement les mémoires d'informations binaires de type file d'attente, également connues sous la désignation FIFO, dans lesquelles la première information introduite est la première extraite.

Elle a pour but une mémoire de file d'attente ayant une structure simple facilement intégrable selon une technique de prédiffusé ou de précaractérisé et ne mettant en oeuvre, à la lecture comme à l'écriture, qu'un faible nombre de couches logiques afin d'atteindre une vitesse de fonctionnement la plus élevée possible.

Elle a pour objet une mémoire de file d'attente pour mots binaires à N digits, N étant un entier supérieur à zéro, comportant :

-une pile de données formée d'un ensemble de N registres à décalage à P étages, P étant un entier égal au nombre maximum de mots binaires empilables dans la mémoire de file d'attente, qui sont pourvus d'une commande de décalage dans un sens placée sous le contrôle d'une entrée de commande d'écriture de la mémoire de file d'attente, d'une entrée série de données reliée à l'un des digits d'une entrée parallèle d'inscription de données de la mémoire de file d'attente et de P sorties parallèles de données,

-un registre de pointage de pile constitué d'un registre à décalage bidirectionnel à P + 1 étages qui est pourvu d'une entrée de commande de décalage dans un sens, dit sens de décalage d'écriture, placée sous le contrôle de l'entrée de commande d'écriture de la mémoire de file d'attente, d'une entrée de commande de décalage dans l'autre sens, dit sens de décalage de lecture, placée sous le contrôle sous le contrôle d'une entrée de commande de lecture de la mémoire de file d'attente, de P + 1 sorties parallèles de données et d'un circuit de prépositionnement de tous ses étages permettant d'inscrire dans son premier étage repéré par rapport au sens de décalage d'écriture, un élément binaire, dit pointeur, circulant ultérieurement dans le dit registre de pointage de pile au gré des commandes d'écriture et de lecture appliquées à la mémoire de file d'attente et

-N sélecteurs 1 parmi P qui sont pourvus chacun de P entrées de sélection de données connectées aux P sorties parallèles de données d'un registre à décalage de la pile de données, d'une sortie de sélection de données constituant l'un des digits d'une sortie parallèle de lecture de données de la mémoire de file d'attente et de P entrées d'adressage connectées aux sorties parallèles de données des P derniers étages du registre de pointage de pile repérés par rapport au sens de décalage d'écriture, et qui sélectionnent les N digits du mot binaire inscrit dans les étages des registres de la pile de données d'un rang, par rapport au sens de décalage d'écriture, inférieur d'une unité à celui de l'étage du registre de pointage de pile renfermant le pointeur.

Cette mémoire de file d'attente est pourvue de moyens de blocage de sa commande d'inscription en cas de présence du pointeur dans le dernier étage du registre de pointage de pile par rapport au sens de décalage d'écriture afin d'éviter un dépassement de la capacité de sa pile et de moyens de blocage de sa commande de lecture en cas de présence du pointeur dans le premier étage du registre de pointage de pile repéré par rapport au sens de décalage d'écriture, afin d'éviter qu'il ne sorte du registre de pointage.

Selon un mode préféré de réalisation, le pointeur est un élément binaire de niveau logique 1 qui se déplace parmi un ensemble d'éléments binaires au niveau logique 0 dans les étages du registre de pointage de pile et chaque sélecteur 1 parmi P est formé d'un ensemble de portes logiques de type "et" à deux entrée connectées l'une à une sortie de données d'un étage de registre à décalage de la pile de données et l'autre à la sortie de données de l'étage du registre de pointage de pile d'un rang supérieur d'une unité, ce rang étant repéré par rapport au sens de décalage d'écriture, les dites portes logiques ayant une sortie à collecteur ouvert permettant un couplage par un "ou câblé".

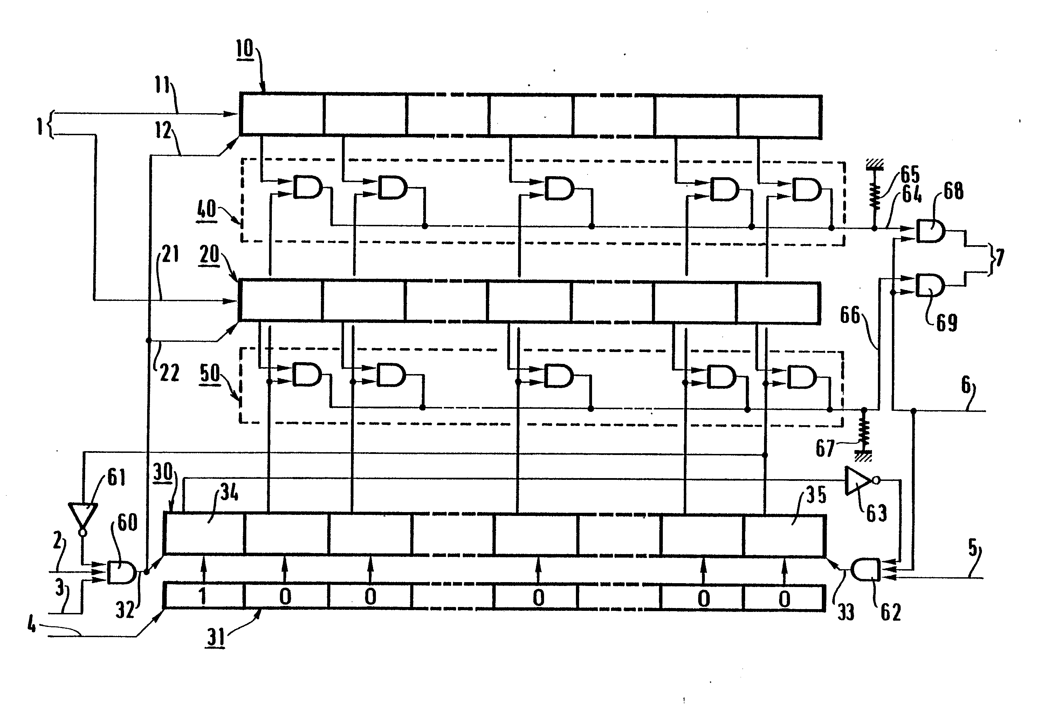

D'autres caractéristiques et avantages de l'invention ressortiront de la description ci-après d'un mode de réalisation donné à titre d'exemple. Cette description sera faite en regard de la figure unique qui représente le schéma d'une mémoire de file d'attente selon l'invention pour mots binaires à deux digits.

On distingue essentiellement sur la figure deux registres à décalage unidirectionnels 10,20 constituant une pile de données pour mots binaires à deux digits, un registre à décalage bidirectionnel 30 constituant un registre de pointage de pile et deux ensembles de portes logiques de type "et" 40,50 constituant des sélecteurs de données reliés aux sorties des registres à décalage 10,20 de la pile de données et adressés par le registre à décalage 30 du registre de pointage de pile.

Chaque digit des mots binaires mémorisés dans la pile de données est enregistré séparément dans un registre à décalage distinct 10,20 à un seul de décalage supposé être de gauche à droite sur la figure.

Ces registres à décalages 10,20 comportent un nombre d'étages P égal au nombre maximum de mots binaires que l'on peut stocker dans la pile de données. Ils sont pourvus d'une entrée série de données 11 respectivement 21 reliée à l'un des digits d'une entrée parallèle d'inscription de données 1 de la mémoire de file d'attente, d'une entrée de commande de décalage 12 respectivement 22 placée sous le contrôle d'une entrée de commande d'écriture 2 et d'une entrée de sélection en écriture 3 de la mémoire de file d'attente par l'intermédiaire d'une porte logique de type "et" 60 et d'une sortie de données à chaque étage.

Le registre de pointage de pile repère l'étage des registres à décalage de la pile de données dans lequel se situe le mot binaire le plus anciennement inscrit sans avoir été lu. Son registre à décalage bidirectionnel 30 comporte P + 1 étages, un étage supplémentaire par rapport aux registres à décalage de la pile de données ayant été prévu comme position de repli pour le pointeur lorsque la pile de données est vide de mot binaire non lu. Il est pourvu d'un circuit de prépositionnement 31 muni d'une commande d'activation reliée à une entrée d'initialisation 4 de la mémoire de file d'attente, d'une entrée 32 de commande de décalage dans un sens, dit sens de décalage d'écriture, supposé être de gauche à droite sur la figure comme le sens de décalage des registres de la pile de données et d'une entrée 33 de commande de décalage en sens inverse, dit sens de décalage de lecture, supposé être de droite à gauche sur la figure.

Pour la clarté de la description, les étages des différents registres à décalage 10, 20, 30 seront considérés ultérieurement dans un ordre croissant allant dans le sens de décalage d'écriture c'est-à-dire de gauche à droite sur la figure.

Le circuit de prépositionnement 31 est un circuit câblé de remise à zéro et à un des étages du registre à décalage bidirectionnel 30. A l'initialisation de la mémoire de file d'attente, il permet, comme représenté, de charger dans le premier étage 34 un niveau logique 1 destiné à être utilisé comme pointeur et dans tous les autres étages un niveau logique 0.

L'entrée 32 de commande de décalage dans le sens de l'écriture est raccordée en parallèle sur les entrées de commande de décalage 12 et 22 des registres 10 et 20 de la pile de données ce qui permet de déplacer le pointeur dans le sens de décalage d'écriture en synchronisme avec l'introduction des mots binaires dans la pile de données. Pour éviter que le pointeur ne s'échappe du registre 30 par suite d'une saturation de la mémoire de file d'attente, la présence du pointeur est repérée dans le dernier étage 35 du registre 30 et utilisée pour bloquer les entrées de commande de décalage 12, 22, 32 par l'intermédiaire de la porte logique de type "et" 60 qui reçoit sur une entrée auxiliaire le signal de sortie du dernier étage 35 du registre 30 transmis par l'intermédiaire d'un inverseur 61.

L'entrée 33 de commande de décalage dans le sens de la lecture est placée sous le contrôle d'une entrée de commande de lecture 5 et de sélection en lecture 6 de la mémoire de file d'attente par l'intermédiaire d'une porte logique de type "et" 62 de manière à déplacer le pointeur dans le sens de décalage de lecture à chaque lecture d'un mot binaire dans la pile de données. Pour éviter que le pointeur ne s'échappe du registre à décalage 30 par suite d'une lecture de la pile de données alors qu'il est dans le premier étage 34 du registre à décalage 30, sa position dans ce premier étage 34 est repérée et utilisée pour bloquer l'entrée de commande de décalage de lecture 33 par l'intermédiaire de la porte logique de type "et" 62 qui reçoit sur une entrée auxiliaire le signal de sortie de ce premier étage 34 transmis par l'intermédiaire d'un inverseur 63.

Le pointeur chargé initialement dans le premier étage 34 donne par sa position dans les P derniers étages du registre à décalage 30 celle, dans les étages des registres 10, 20 de la pile de données, du mot binaire le plus anciennement inscrit sans avoir été lu puisqu'il est déplacé, comme ce dernier, dans le sens de décalage d'écriture à chaque introduction d'un nouveau mot dans la pile de données et inversement dans le sens de décalage de lecture à chaque lecture d'un mot binaire dans la pile de données. Du fait de l'utilisation du premier étage 34 du registre 30 comme position de repli pour le pointeur, ce dernier occupe dans le registre 30 l'étage de rang immédiatement supérieur à celui de l'étage des registres 10, 11 de la pile de données renfermant le mot binaire le plus anciennement inscrit sans avoir été lu.

L'ensemble 40 de portes logiques de type "et" constitue un sélecteur de données 1 parmi P permettant de lire l'étage du registre à décalage 10 de la pile de données de rang immédiatement inférieur à celui de l'étage du registre à décalage 30 renfermant le pointeur. Il renferme P portes logiques jouant le rôle d'interrupteurs individuels disposés entre une sortie commune 64 et la sortie de données de chacun des étages du registre à décalage 10 de la pile de données, et commandés par les P derniers étages du registre à décalage 30. Les portes logiques sont de type "et" à deux entrées avec une sortie à haute impédance au niveau logique 0 et à faible impédance au niveau logique 1. Elles ont chacune une entrée connectée à la sortie de données d'un étage du registre à décalage 10 de la pile de données, l'autre entrée connectée à la sortie de données de l'étage du registre à décalage 30 de rang immédiatement supérieur et leur sortie raccordée à la sortie commune 64 pour former un "ou câblé" matérialisé sur la figure par une résistance 65 reliée à la masse. Toutes les portes logiques de l'ensemble 40 qui sont reliées en entrée aux sorties de données d'étages du registre à décalage 30 ne renfermant pas le pointeur sont bloquées par un niveau logique 0 et délivrent en sortie un niveau logique 0 sous forte impédance. Celle qui est reliée à la sortie de données d'un étage du registre à décalage 30 contenant le pointeur, s'il y en a une, c'est-à-dire si le pointeur n'est pas dans le premier étage 34 qui ne commande aucune porte de l'ensemble 40, est en revanche débloquée, recopie l'état de l'étage de rang immédiatement inférieur du registre à décalage 10 et engendre en sortie, soit un niveau logique 1 sous faible impédance qui prime sur les niveaux logiques 0 délivrés par toutes autres portes logiques de l'ensemble 40, soit un niveau logique 0 sous forte impédance qui confirme les niveaux logiques 0 délivrés par toutes les autres portes logiques de l'ensemble 40.

L'ensemble 50 de portes logiques de type "et", de même constitution que l'ensemble 40, joue le même rôle que ce dernier vis à vis du registre à décalage 20 de la pile de données. Les P portes logiques qu'il renferme sont reliées à une sortie commune 66 formant un "ou câblé" matérialisé sur la figure par une résistance 67 connectée à la masse.

Les sorties 64 et 66 des ensembles de portes logiques 40 et 50 sont reliées aux digits d'une sortie 7 de lecture de données de la mémoire de file d'attente par l'intermédiaire de deux portes logiques de type "et" 68, 69 contrôlées par l'entrée de sélection en lecture 6 de la mémoire de file d'attente.

La structure qui vient d'être décrite pour la mémoire de file d'attente met en oeuvre en écriture comme en lecture un très faible nombre de couches logiques ce qui lui donne un maximum de rapidité. Sa simplicité et sa répétitivité permettent une intégration aisée. Il est en outre facile d'adapter ses dimensions aux besoins, sa pile de données pouvant être rétrécie et réduite à un seul registre à décalage ou élargie et comporter plus de deux registres à décalage en parallèle ou rallongée, des entrées sorties pouvant être prévues pour permettre des mises en cascade.

On peut, sans sortir du cadre de l'invention modifier certaines dispositions ou remplacer certains moyens par des moyens équivalents.

## Revendications

1/ Mémoire de file d'attente très haute vitesse et temps de traversée constant très court indépendant du nombre d'étages, de type premier entré, premier sorti, pour mots binaires à N digits, N étant un entier supérieur à zéro, caractérisée en ce qu'elle comporte :

-une pile de données formée d'un ensemble de N registres à décalage (10, 20) à P étages, P étant un entier égal au nombre maximum de mots binaires empilables dans la mémoire de file d'attente, qui sont pourvus d'une entrée de commande de décalage dans un sens (12, 22) placée sous le contrôle d'une entrée de commande d'écriture (2) de la mémoire de file d'attente, d'une entrée série de données (11) reliée à l'un des digits d'une entrée parallèle (1) d'inscription de données de la mémoire de file d'attente et de P sorties parallèles de données,

-un registre de pointage de pile constitué d'un registre à décalage bidirectionnel (30) à P + 1 étages, qui est pourvu d'une entrée (32) de commande de décalage dans un sens, dit sens de décalage d'écriture, placée sous le contrôle de l'entrée de commande d'écriture (2) de la mémoire de file d'attente, d'une entrée (33) de commande de décalage dans l'autre sens, dit sens de décalage de lecture, placée sous le contrôle d'une entrée de commande de lecture (5) de la mémoire de file d'attente, de P + 1 sorties parallèles de données et d'un circuit de prépositionnement (31) de tous ses étages, le dit circuit de prépositionnement (31) étant muni d'une commande d'activation reliée à une entrée d'initialisation (4) de la mémoire de file d'attente et permettant d'inscrire dans un premier étage (34) repéré par rapport au sens de décalage d'écriture un élément binaire, dit pointeur, circulant ultérieurement dans les étages des registres de pointage de pile au gré des commandes d'écriture et de lecture appliquées à la mémoire de file d'attente,

-N sélecteurs 1 parmi P (40, 50) qui sont pourvus chacun de P entrées de sélection de données connectées aux P sorties parallèles de données d'un registre à décalage (10, 20) de la pile de données, d'une sortie de sélection de données constituant l'un des digits d'une sortie parallèle de lecture de données (7) de la mémoire de file d'attente et des P entrées d'adressage connectées aux sorties parallèles de données des P derniers étages du registre de pointage de pile (30) repérés par rapport au sens de décalage d'écriture, et qui sélectionnent les N digits du mot binaire inscrits dans les étages de registre à décalage (10, 20) de la pile de données d'un rang, par rapport au sens de décalage d'écriture, inférieur d'une unité à celui de l'étage du registre de pointage de pile (30) renfermant le pointeur,

-des moyens de blocage des entrées de commande de décalage dans le sens de décalage d'écriture (12, 22, 32) des registres à décalage (10, 20, 30) de la pile de données et du registre de pointage de pile en cas de présence du pointeur dans le dernier étage (35) du registre de pointage de pile, étage repéré par rapport au sens de décalage d'écriture et, - des moyens de blocage de l'entrée (33) de commande de décalage dans le sens de décalage de lecture du registre à décalage (30) du registre de pointage de pile en cas de présence du pointeur dans le premier étage (34) du registre de pointage de pile, étage repéré par rapport au sens de décalage d'écriture.

2/ Mémoire selon la revendication 1 dans laquelle le pointeur est un élément binaire au niveau logique 1 circulant parmi des éléments binaires au niveau logique 0 dans le registre de pointage de pile (30) caractérisée en ce que chaque sélecteur 1 parmi P (40, 50) comporte un ensemble de P portes logiques de type "et" à deux entrées avec une sortie à haute impédance au niveau logique 0 et à faible impédance au niveau logique 1, chacune de ces portes logiques ayant une entrée connectée à la sortie de données d'un étage d'un registre à décalage (10, 20) de la pile de données, l'autre entrée connectée à la sortie de données de l'étage du registre à décalage (30) du registre de pointage de pile de rang immédiatement supérieur par rapport au sens de décalage d'écriture, et sa sortie reliée par un "ou câblé" aux sorties des autres portes logiques du sélecteur considéré.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 646 526 (SECRETARY OF THE ARMY USA) * En entier * | 1 | G 06 F 5/06 |
| Y | FR-A-2 231 295 (CIT-ALCATEL) * En entier * | 1. | |
| A | US-A-4 423 482 (SPERRY CORP.) * Colonne 4, ligne 14 - colonne 5, ligne 16; figure 3 * | 1-3 | |
| A | EP-A-0 192 883 (DATA GENERAL CORP.) * Page 25, ligne 9 - page 28, ligne 7; figures 18-19 * | 1 | |
| A | FR-A-2 209 979 (CABLE & WIRELESS LTD) * En entier * | 1 | |
| Y | THE RADIO AND ELECTRONIC ENGINEER, vol. 26, no. 4, octobre 1963, pages 347-356, Londres, GB; G. CLARK: "Electronic queueing control for materials handling" * Page 349, colonne de gauche, ligne 22 - page 350, colonne de gauche, ligne 25; figure 6 * | 1,2 | |

DOMAINES TECHNIQUES
RECHERCHES (Int. Cl.4)

G 06 F 5/06
G 06 F 7/00
G 11 C 19/00

Le présent rapport de recherche a été établi pour toutes les revendications

| Lieu de la recherche | Date d'achèvement de la recherche | Examinateur |
|---|---|---|
| LA HAYE | 19-10-1987 | DEGRAEVE L.W.G. |